## Europäisches Patentamt
## European Patent Office
## Office européen des brevets

(11) Veröffentlichungsnummer: **0 250 639**
**B1**

(12) **EUROPÄISCHE PATENTSCHRIFT**

(45) Veröffentlichungstag der Patentschrift:
04.04.90

(21) Anmeldenummer: 86110467.7

(22) Anmeldetag: 29.07.86

(51) Int. Cl.⁴: **C02F 11/00**, B03B 9/00, B01D 21/00

(54) Verfahren und Vorrichtung zum Entschlammen von Gewässern.

(30) Priorität: 20.06.86 DE 3620700

(43) Veröffentlichungstag der Anmeldung:
07.01.88 Patentblatt 88/1

(45) Bekanntmachung des Hinweises auf die Patenterteilung:
04.04.90 Patentblatt 90/14

(84) Benannte Vertragsstaaten:
AT BE CH DE IT LI NL SE

(56) Entgegenhaltungen:
DE-A- 3 517 931
US-A- 2 538 285

AUFBEREITUNGS-TECHNIK, Band 23, Nr. 4, April 1982, Seiten 169-172, Wiesbaden, DE; M. BRÄUER: "Modernes Kieswerk im Raum Karlsruhe" AUFBEREITUNGS-TECHNIK, Band 27, Nr. 7, Juli 1986, Seiten 396-402, Wiesbaden, DE; W. HASSE et al.: "Ein neues Konzept der Kohleaufbereitung in Kanada - 1000t/h-Wäsche Obed-Marsh in Produktion" PORTS AND DREDGING, Nr. 121, 1985, Seiten 14-17, Papendrecht, NL; "Verplaatsbare goudwasinstallatie" WATER POLLUTION CONTROL FEDERATION, WASTEWATER TREATMENT PLANT DESIGN, 1977, Seiten 160,183,340, Washington, US; "Waste water treatment plant design"

(73) Patentinhaber: Kreyenberg, Heiner, Dipl.-Ing., Waldseestrasse 31, D-4030 Ratingen 4(DE)

(72) Erfinder: Kreyenberg, Heiner, Dipl.-Ing., Waldseestrasse 31, D-4030 Ratingen 4(DE)

(74) Vertreter: Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11(DE)

(56) Entgegenhaltungen: (Fortsetzung)
F. MEINCK et al.: "Industrie-Abwässer", 4. Auflage, 1968, Seiten 81,82, Gustav Fischer Verlag, Stuttgart, DE

## Beschreibung

Die Erfindung betrifft ein Verfahren zum Entschlammen von Gewässern, bei dem die im Schlamm enthaltenen anorganischen (Steine, Kies, Sand etc.) und organischen (Holz, Wurzeln etc.) Bestandteile voneinander separiert werden, sowie eine Anlage zur Durchführung des Verfahrens. Das Verfahren und die Anlage sind gleichermaßen für die Aufbereitung von Faulschlammsedimenten geeignet.

Bei der Entschlammung von Gewässern fallen eine Vielzahl von Stoffen an, die grob in anorganische und organische Bestandteile unterteilt werden können. Bei den anorganischen Bestandteilen handelt es sich vor allem um Steine, Kies, Sand etc., während die organischen Bestandteile unter anderem Holz und Wurzeln umfassen. Zu diesen organischen Bestandteilen müssen auch Öle gezählt werden, die in die Gewässer geleitet wurden und diese verschmutzen. Daneben gibt es noch chemische Verunreinigungen, beispielsweise die Einleitung von Phosphaten in die Gewässer, die sich in dem Wasser lösen.

Ziel bei der Entschlammung von Gewässern ist es, diese von diesen anorganischen und organischen Bestandteilen zu befreien. Allerdings besteht ein großer Problem darin, was mit diesen Bestandteilen geschehen soll, wenn sie aus dem Gewässer entfernt worden sind. Da Deponieräume immer rarer werden, muß eine Zielsetzung bei der Entschlammung von Gewässern darin liegen, die anorganischen und organischen Bestandteile, also Steine, Kies, Sand, Holz, Wurzeln etc., zu gewinnen und als verwertbares Wirtschaftsgut weiterzuverwenden. Nur noch ein Bruchteil davon soll der Deponierung zugeführt werden. Diese Zielsetzung ist mit den bekannten Verfahren und mit den bekannten Anlagen nicht bis zur vollsten Zufriedenheit erreichbar, so daß immer noch ein Großteil des aus den Gewässern gewonnenen Schlamms die Deponieräume belastet.

Davon ausgehend liegt der Erfindung die Aufgabe zugrunde, die bekannten Verfahren zum Entschlammen von Gewässern so zu verbessern, daß nur noch geringe Mengen zu deponieren sind und daß die nicht deponierten Bestandteile des Schlamms als verwertbare Wirtschaftsgüter der Weiterverwertung zugeführt werden; weiterhin soll eine Anlage zur Durchführung des Verfahren geschaffen werden.

Als technische Lösung wird mit der Erfindung ein Verfahren vorgeschlagen, bei dem zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden, bei dem anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden und bei dem schließlich in einer dritten Stufe die anorganische und organische Trübe der dann übrig gebliebenen Bestandteile entwässert und dabei der gewonnene Dickschlamm und das Ablaufwasser weiterverarbeitet bzw. abgeführt werden.

Durch diese Verfahrensschritte ist eine einwandfreie Trennung der im Schlamm enthaltenen anorganischen und organischen Bestandteile voneinander möglich, wobei die einzelnen Bestandteile als verwertbare Wirtschaftsgüter der Weiterverwertung zugeführt werden können. So werden in der ersten Stufe die Steine und der Kies der anorganischen Bestandteile ausgesondert und können beispielsweise einem Kieslager zur Weiterverwertung zugeführt werden. Gleichzeitig werden die organischen Bestandteile, also beispielsweise Holz oder Wurzeln, ausgesondert und werden ebenfalls der Weiterverwertung zugeführt, wo sie beispielsweise zur Energiegewinnung verbrannt oder aber auch kompostiert werden können. Die übrig gebliebenen Feinteile werden anschließend der zweiten Stufe zugeführt, wo dann die restlichen anorganischen Bestandteile, also der Sand, separiert und beispielsweise einem Sandlager zur Weiterverwertung zugeführt werden. Übrig bleiben winzige anorganische, d.h. mineralische Bestandteile, die in der zweiten Stufe nicht separiert werden konnten, sowie die feinen organischen Bestandteile, die in einer Trübe schließlich einer dritten Stufe zugeführt werden, wo eine Entwässerung durchgeführt wird, aus dem dann Dickschlamm gewonnen wird. Dieser kann dann deponiert, kompostiert oder verbrannt werden. Das Ablaufwasser kann entweder den einzelnen Stufen oder aber auch dem Gewässer zurückgeführt werden. Durch diese Verarbeitungsstufen des Schlammes werden aus diesem Bestandteile gewonnen, die in großem Maße als Wirtschaftsgüter weiterverwertet werden können, ohne daß sie deponiert werden müssen.

Gemäß einem weiteren Merkmal der Erfindung wird vorgeschlagen, daß in einer Vorstufe zur ersten Stufe zunächst das Wasser zusammen mit den Bestandteilen unterhalb der bestimmten Größe insbesondere durch einen Siebvorgang abgeschieden und dann der ersten Stufe zugeführt wird und die vorentwässerten Bestandteile oberhalb der bestimmten Größe nach anorganischen und organischen Bestandteilen getrennt und in dieser getrennten Form der ersten Stufe aufgegeben werden. Dies hat den Vorteil, daß durch die Vorstufe zur ersten Stufe eine noch bessere Trennung der Grobbestandteile voneinander möglich ist. Zunächst werden die Feinteile vorzugsweise durch einen Siebvorgang abgeschieden und der ersten Stufe zugeführt, während die vorentwässerten Grobbestandteile nach anorganischen und organischen Bestandteilen getrennt werden und in dieser getrennten Form der ersten Stufe aufgegeben werden. Dies hat insbesondere den Vorteil, wenn das Holz einwandfrei von den mineralischen Bestandteilen getrennt werden soll, was zu Schwierigkeiten führen kann. Durch die Mehrstufigkeit des Verfahrensablaufes wird jedoch dieses Problem behoben.

Vorzugsweise wird das abgeschiedene Wasser beim Aussondern der anorganischen Bestandteile in der zweiten Stufe der ersten Stufe rückgeführt, so daß sich das Verfahren zum Betreiben der einzelnen Stufen vereinfacht.

In einer bevorzugten Durchführung des Verfahrens werden zwischen der zweiten und der dritten Stufe die im Wasser gelösten Phosphate insbesondere durch Fe(III)Chloridsulfat oder Fe(II)Sulfat ausgefällt und in der dritten Stufe mit dem Dickschlamm ausgesondert. Durch diese bevorzugte Verfahrensdurchführung wird dem Problem begegnet, daß die Gewässerschlämme sehr oft mit Phosphaten angereichert sind, die im Wasser gelöst sind. Wenn das Ablaufwasser dem Gewässer wieder zurückgeführt wird, ist es unerlässlich, diese Phosphate zu entfernen. Dies geschieht erfindungsgemäß vorzugsweise zwischen der zweiten und der dritten Stufe, indem die im Wasser gelösten Phosphate ausgefällt werden, so daß sie in der dritten Stufe absepariert und dem Dickschlamm zugeordnet werden können.

In einer weiteren bevorzugten Ausführungsform wird vorgeschlagen, daß zwischen der zweiten und der dritten Stufe das Wasser insbesondere durch Zugabe von Kalkmilch neutralisiert wird. Dies wirkt insbesondere dem Problem der Übersäuerung der Gewässer durch $SO_2$-Niederschläge entgegen, die insbesondere die Fauna in den Gewässern zum Sterben bringen. Durch die Zugabe von Kalkmilch findet eine Neutralisation des Ablaufwassers statt, so daß sich der pH-Wert im Idealfall auf 7 einpendelt. Durch die Kalkmilchzugabe findet ebenfalls eine Ausfällung statt, die dann dem Dickschlamm in der dritten Stufe zugeführt werden kann.

In einer weiteren bevorzugten Ausführungsform wird weiter vorgeschlagen, daß nach der dritten Stufe mögliches Öl aus dem Ablaufwasser absepariert und weiterverwendet und das verbliebene Ablaufwasser in das Gewässer oder in die vorliegenden Stufen rückgeführt wird. Dabei wird vorzugsweise zum Abseparieren des Öls aus dem Ablaufwasser dieses mit Luft oder Sauerstoff versetzt, wobei sich Luft- oder Sauerstoffteilchen an den Öltröpfchen anlagern, so daß die so gebildeten Öl/Luft-Teilchen durch den Auftrieb aufschwimmen und abgeführt werden können. Durch diesen Verfahrensschritt wird sichergestellt, daß das Ablaufwasser von möglichen Ölrückständen befreit wird, so daß das Ablaufwasser ohne weiteres dem Gewässer rückgeführt werden kann, wobei dieses Ablaufwasser oft eine bessere Qualität besitzt als das Wasser im Gewässer selbst. Dadurch wird vermieden, daß das Ablaufwasser in Kläranlagen geleitet werden muß, die in der Nähe von Seen bzw. Flüssen jedoch nur sehr selten vorkommen. Das separierte Öl selbst kann der Weiterverwertung, beispielsweise der Altölaufbereitung zugeführt werden. Neben einem ölfreien Wasserablauf wird durch die pneumatische Flotation der Chemische Sauerstoffbedarf (CSB) sowie der Biochemische Sauerstoffbedarf (BSB) gesenkt, wobei die CSB-Werte zwischen 20 und 50 % verbessert werden können.

Vor der pneumatischen Flotation wird vorzugsweise das Ablaufwasser mit ölemulsionsbrechenden Chemikalien zur Erstellung eines Ölschlammes versetzt, so daß die pneumatische Flotation zur Separation des Öls optimal arbeitet und somit der größte Teil des Öls aus dem Ablaufwasser separiert werden kann.

Schließlich wird vorgeschlagen, daß aus dem Ablaufwasser die Schwebe- und Schwimmpartikel beseitigt, insbesondere ausgefiltert werden. Dadurch wird der Chemische Sauerstoffbedarf (CSB) erheblich verringert.

Die Anlage zur Durchführung des Verfahrens ist ausgehend von einer Entnahmevorrichtung für den Schlamm sowie Abscheidevorrichtungen für die anorganischen und organischen Bestandteile erfindungsgemäß gekennzeichnet durch einen Klassierer zum Aussondern der Bestandteile oberhalb einer bestimmten Größe und Trennen nach anorganischen und organischen Bestandteilen, eine dem Klassierer nachgeordnete Zyklonanlage zum Aussondern der anorganischen Bestandteile oberhalb einer Mindestgröße aus den verbliebenen Bestandteilen, sowie eine der Zyklonanlage nachgeordnete Zentrifuge zum Entwässern der anorganischen und organischen Trübe der übrig gebliebenen Bestandteile und Überführen in Dickschlamm. Die erfindungsgemäße Anlage zur Durchführung des Verfahrens besteht somit aus insgesamt drei hintereinandergeschalteten Vorrichtungen, nämlich einem Klassierer, einer Zyklonanlage sowie einer Zentrifuge. Mit dem Klassierer werden dabei die Grobbestandteile von den Feinbestandteilen getrennt und für die Weiterverwertung ausgetragen. Die Feinbestandteile werden dann der Zyklonanlage zugeführt, wo der Sand separiert und einem Sandlager ebenfalls zur Weiterverwertung zugeführt wird. Die restlichen organischen Feinbestandteile und mineralischen Feinbestandteile, die in der Zyklonanlage nicht absepariert werden konnten, werden anschließend der Zentrifuge zugeführt, wo eine Entwässerung stattfindet und der so gewonnene Dickschlamm abgeführt wird.

In einer bevorzugten Ausführungsform der Anlage wird vorgeschlagen, daß der Klassierer ein Schwingklassierer mit mehreren Bahnen ist, daß dem Schwingklassierer ein Siebzyklon mit einer nachgeordneten Waschtrommel vorgeschaltet ist, daß der Siebzyklon einen Oberlauf und einen Unterlauf besitzt, wobei der Oberlauf direkt zu einer Bahn des Schwingklassierers führt und auf diese in dem Siebzyklon vorabgeschiedenes Wasser mit Bestandteilen unterhalb einer bestimmten Größe aufgibt und wobei der Unterlauf zu der Waschtrommel führt und die vorentwässerten Bestandteile oberhalb der bestimmten Größe dieser aufgibt, und daß in der Waschtrommel die anorganischen und organischen Bestandteile voneinander getrennt und jeweils verschiedenen Bahnen des Schwingklassierers zugeführt werden. Durch die Kombination aus Siebzyklon, Waschtrommel und Schwingklassierer wird eine optimale Abscheidung der Grobbestandteile getrennt in anorganische Bestandteile und organische Bestandteile ermöglicht. In dem Siebzyklon wird zunächst eine Wasservorabscheidung mit einer Vorabsiebung von Bestandteilen unterhalb einer bestimmten Größe vorgenommen und über einen Oberlauf direkt dem Schwingklassierer zugeführt, der zu diesem Zweck mit mehreren Bahnen versehen ist. Die vorentwässerten Grobbestandteile des Siebzyklons werden hingegen über einen Unterlauf der Waschtrommel zugeführt, die mit Schikanen versehen ist, die eine Separation der anorganischen Grobbestandteile von den organischen Grobbestandteilen ermöglichen. Diese getrennten Bestandteile werden anschließend aus der Waschtrommel separaten Bahnen des Schwingklassierers zugeführt, in der eine weitere Klassierung der Bestandteile vorgenommen werden kann. Über diesen Schwingklassierer werden die Bestandteile mehrfach geleitet und von feinen organischen und mineralischen Partikeln gereinigt. Die Kombination von Siebzyklon, Waschtrommel und Schwingklassierer hat insbesondere den Vorteil, daß die anorganischen und die organischen Grobbestandteile einwandfrei voneinander getrennt werden können, da dies mit einem Schwingklassierer alleine nur sehr schwer möglich ist, da eine dynamische Klassierung zur Abtrennung des mit Wasser vollgesogenen Holzes, das keinen Auftrieb mehr hat, nicht möglich ist.

Vorzugsweise ist zwischen der Zyklonanlage und der Zentrifuge eine Fällungsstation zum Ausfällen der im Wasser gelösten Phosphate insbesondere durch Fe(III)Chloridsulfat und Fe(II)Sulfat geschaltet. Durch diese Fällungsstation ist auf einfache Weise eine Entfernung der im Wasser gelösten Phosphate möglich. Weiterhin ist vorzugsweise zwischen der Zylkonanlage und der Zentrifuge eine Neutralisationsstation zum Neutralisieren des Wassers insbesondere mit Kalkmilch geschaltet. Durch diese Neutralisationsstation durch Zugabe beispielsweise von Kalkmilch wird das Wasser entsäuert, so daß es ohne weiteres und sogar in besserem Zustand dem Gewässer rückgeführt werden kann. Sowohl beim Ausfällen der Phosphate als auch bei der Zugabe von Kalkmilch wird das Fällungsprodukt in der nachgeschalteten Zentrifuge absepariert und mit dem gewonnenen Dickschlamm ausgetragen.

Weiterhin wird in einer weiteren bevorzugten Ausführungsform der Anlage vorgeschlagen, daß nach der Zentrifuge eine pneumatisch Flotationszelle mit Begasungsreaktor und Trenngefäß mit Überlauf zum Abscheiden von Öl aus dem Ablaufwasser angeordnet ist. Durch die pneumatische Flotationszelle ist zusätzlich noch eine Abseparation von Öl möglich, wobei dies auf technisch sehr einfache Weise in der pneumatischen Flotationszelle erfolgt, die mit ihrem Begasungsreaktor an den Ölteilchen Luft bzw. Sauerstoff anlagert, so daß die Öl/Luft-Teilchen durch ihren Auftrieb in dem Trenngefäß aufschwimmen und mittels eines Überlaufs ausgetragen werden können, so daß das Ölschlammkonzentrat der Weiterverwertung beispielsweise in einer Altölaufbereitung zugeführt werden kann.

Schließlich wird vorgeschlagen, daß nach der Zentrifuge ein Filter, insbesondere Sandfilter oder Festkörperfilter, angeordnet ist, der aus dem Ablaufwaser die Schwebe- und Schwimmpartikel beseitigt. Dadurch wird der Chemische Sauerstoffbedarf (CSB) erheblich verringert.

Weitere Einzelheiten, Merkmale und Vorteile ergeben sich aus der nachfolgenden Beschreibung der zugehörigen Zeichnung, in der eine bevorzugte Ausführungsform einer erfindungsgemäß ausgebildeten Anlage zur Durchführung des Verfahrens zum Entschlammen von Gewässern schematisch dargestellt ist.

Die Anlage besteht zunächst aus einer Entnahmevorrichtung 1 für den Schlamm beispielsweise in Form eines Schneidkopfsaugbaggers. Diese Entnahmevorrichtung 1 ist mit einem Steinfangkorb 2 ausgestattet, der beispielsweise eine Maschenweite von 100 mm hat und somit größere Bestandteile als 100 mm auffängt.

Die Sediment-Suspension wird unter Zwischenschaltung eines Mengenreglers 3 für die Anlagenbeschickung einer ersten Trennstufe bestehend aus einem Siebzyklon 4, einer Waschtrommel 5 sowie einem Schwingklassierer 6 zugeführt. In dieser ersten Trennstufe erfolgt eine Trennung der anorganischen und organischen Grobbestandteile oberhalb einer Größe von beispielsweise 6 mm von den Feinbestandteilen unterhalb von 6 mm. In dem Siebzyklon 4 erfolgt eine Wasservorabscheidung und Vorabsiebung der Grobbestandteile oberhalb 6 mm, so daß in einem Oberlauf 7 das vorab geschiedene Wasser mit Feinbestandteilen unterhalb 6 mm abgeführt und über eine Leitung 8 dem Schwingklassierer 6 zugeführt wird. Die im Siebzyklon 4 vorentwässerte Feststoffsuspension mit den Grobbestandteilen wird über einen Unterlauf 9 der Waschtrommel 5 zugeführt, die mit Schikanen versehen ist. Diese bewirken eine Abscheidung der groben organischen Bestandteile (Holz, Wurzeln etc.) von den groben anorganischen Bestandteilen (Steine, Kies, Sand etc.), wobei der Austrag aus der Waschtrommel 5 separat über die Leitung 10 (organische Bestandteile) und die Leitung 11 (anorganische Bestandteile) erfolgt. Eine weitere, jedoch nicht eingezeichnete Leitung führt von der Waschtrommel 5 zu dem Schwingklassierer 6, und zwar führt diese Leitung die Feinteile unter 6 mm aus der Waschtrommel 5 ab und führt sie dem Schwingklassierer 6 zu.

Der Schwingklassierer 6 besteht aus vier Bahnen und zwar eine erste Bahn für die Wasservorabscheidung und die Vorabsiebung aus dem Oberlauf 7 und der nachfolgenden Leitung 8, eine zweite Bahn für die anorganischen Bestandteile aus der Waschtrommel 5 über die Leitung 11, eine dritte Bahn für die organischen Bestandteile ebenfalls aus der Waschtrommel 5 über die Leitung 10 sowie eine vierte Bahn für die Feinteile unter 6 mm aus der Waschtrommel 5 über die nicht eingezeichnete Leitung. Dabei können auch die erste und die vierte Bahn mit den Feinteilen unter 6 mm zusammengefaßt werden.

Auf den Bahnen des Schwingklassierers 6 werden die Grobbestandteile mehrfach hin- und hergeleitet und von feinen organischen und mineralischen Partikeln gereinigt. Dies gilt insbesondere für die organischen Grobbestandteile, um bei diesen Feinstteile auszuwaschen, die eventuell mit Schwermetallen kontaminiert sind. Die so gereinigten organischen Bestandteile werden von ihrer entsprechenden Bahn des Schwingklassierers 6 einem Container 12 zugeführt, von wo aus das Holz und die Wurzeln der Verbrennung beispielsweise zur Energiegewinnung oder der Kompostierung zugeführt werden. Die anorganischen Grobbestandteile werden ebenfalls nach deren Reinigung einem Kieslager 13 zugeführt, das Steine größer als 6 mm beinhaltet. Auch der Kies im Kieslager 13 kann ebenso wie das Holz und die Wurzeln der Weiterverwertung zugeführt werden.

Mittels einer Förderpumpe 14 werden die anorganischen und organischen Feinbestandteile unterhalb einer Größe von 6 mm einer (Multi-)-Zyklonanlage 15 in Suspension zugeführt. In dieser Zyklonanlage 15 erfolgt eine Abscheidung des Sandes zwischen der Mindestgröße 0,063 und 6 mm. Der Zyklonanlage 15 ist dabei ein Schwertrübesortierer 16 mit einer Frischwasser- oder Zentratwasser-Zufuhr 17 nachgeschaltet, die den gereinigten Sand über einen Schwingentwässerer 18 einem Sandlager 19 zuführt. Das Filtratwasser aus dem Schwingentwässerer 18 wird über eine Leitung 20 dem Schwingklassierer 6 rückgeführt.

Die feinen mineralischen Bestandteile unterhalb 0,063 mm, die in der Zyklonanlage 15 nicht ausgesondert werden können, sowie die organischen Feinbestandteile werden über Leitungen 21 (mineralische Trübe) und 22 (organische Trübe) einem Vorlagebecken 23 mit einem Homogenisierer 24 zugeführt. Von dort aus erfolgt der Weitertransport der Trübe mittels einer Förderpumpe 25 zu einer Zentrifuge 26, die die dritte Trennstufe nach der Zyklonanlage 15 als zweite Trennstufe bildet.

In die Leitung 27 zwischen dem Vorlagebecken 23 und der Zentrifuge 26 ist eine Fällungsstation 28 geschaltet, die die in dem Wasser gelösten Phosphate durch Zugabe von Fe(II)Sulfat oder Fe(III)Chloridsulfat ausfällen und in sedimentsfähige Feststoffe überführen sollen.

Weiterhin ist in die Leitung 27 zwischen dem Vorlagebecken 23 und der Zentrifuge 26 eine Neutralisationsstation 29 geschaltet, die durch Zugabe beispielsweise von Kalkmilch das Wasser entsäuern und damit neutralisieren und zugleich eine Sedimentationshilfe geben soll. Auch hier erfolgt eine Ausfällung zu einem sedimentationsfähigen Feststoff.

In der Zentrifuge 26 erfolgt eine Entwässerung der mineralischen und organischen Trübe sowie der Fällungsstoffe aus den Stationen 28 und 29. Der gewonnene Dickschlamm wird beispielsweise über ein Transportband 30 einem Lastkraftwagen 31 aufgegeben und der Deponierung, Kompostierung, Verbrennung oder dgl. zugeführt.

Das Ablaufwasser aus der Zentrifuge 26 wird schließlich einer pneumatischen Flotationszelle 32 zugeführt. Diese besteht aus zwei Begasungsreaktoren 33, die beispielsweise mit einem Kompressor betrieben werden. Weiterhin besteht die pneumatische Flotationszelle 32 aus einem Trenngefäß 34 mit einem Überlauf 35.

Die pneumatische Flotationszelle 32 dient zur Abscheidung des im Ablaufwasser möglicherweise enthaltenen Öls. Zu diesem Zweck wird das mit dem Öl verseuchte Ablaufwasser durch die beiden Begasungsreaktoren 33 geschickt, in der eine feinblasige Gasdispergierung erfolgt, wobei das Ablaufwasser möglichst vollständig mit gleichen Gasblasen durchsetzt wird. Das in die Begasungsreaktoren 33 eintretende Öl/Wasser-System wird dabei im Querstrom mit Gas beaufschlagt, wobei hohe Gas- und Wassergeschwindigkeiten in den Begasungsreaktoren 33 für die Anlagerungskinetik erforderlich sind. Durch die hier herrschenden physikalischen Bedingungen (Mikroturbulenzen und Luftblasen im "status nascendi", verbunden mit der zwangsweisen Zusammenführung der Ölteilchen mit den Gasblasen) wird eine sehr hohe Anhaftung der hydrophoben Ölpartikel an die Gasphase während der sehr kurzen Verweilzeit im Begasungsreaktor 33 erreicht. Dabei kann die Bildung der Gasblasen durch eine poröse Rohrwandung mit sehr gleichmäßigen Öffnungen geringen Durchmessers erfolgen. Die eigentliche Ölseparation findet dann im nachgeschalteten, zylindrischen Trenngefäß 34 statt, wobei die Öl/Luft-Teilchen aufgrund ihrer geringeren Dichte nach oben an die Oberfläche treiben, wobei die ölreiche Phase über den Überlauf 35 ausgetragen und das Konzentrat des Ölschlamms in einem Container 36 ausgetragen und gesammelt wird. Von dort aus kann der Ölschlamm beispielsweise der Altölaufbereitung zugeführt werden. Das abgetrennte Emulsionswasser aus dem Container 36 wird dabei über die Leitung 37 der pneumatischen Flotationszelle 32 rückgeführt.

Um die Ölabscheidung zu verbessern, werden mittels einer Zugabestation 38 ölemulsionsbrechende Chemikalien zur Erstellung eines Ölschlammes dem Ablaufwasser aus der Zentrifuge 26 zugegeben, wobei es sich bei diesen Chemikalien vorzugsweise um Tenside handelt.

Das ölgereinigte Ablaufwasser aus der pneumatischen Flotationszelle 32 wird nach Passieren eines Füllstandreglers 39 nach Passieren eines Filters 40 in einen Vorflutergraben 41 eingeleitet, der eine Ölsperre 42 haben kann. Von dort aus erfolgt die Rückführung des Ablaufwassers zurück in das Gewässer. Der Filter 40 soll das Ablaufwasser von Schwebepartikeln und Schwimmstoffen befreien, wobei Sandfilter und Festkörperfilter Verwendung finden können. Dadurch wird der Chemische Sauerstoffbedarf (CSB) erheblich verringert.

Die beschriebene Anlage kann stationär aufgebaut sein. Sie kann aber auch mobil sein, d.h. sie kann zu ihrem jeweiligen Einsatzgebiet transportiert werden. Die Anlage kann dabei eine einzige kompakte Vorrichtung sein, in der alle Elemente enthalten sind.

## Bezugszeichenliste

1 Entnahmevorrichtung
2 Steinfangkorb
3 Mengenregler
4 Siebzyklon
5 Waschtrommel
6 Schwingklassierer
7 Oberlauf
8 Leitung (Feinbestandteile und Wasser)
9 Unterlauf
10 Leitung (organische Grobbestandteile)
11 Leitung (anorganische Grobbestandteile)
12 Container
13 Kieslager
14 Förderpumpe
15 Zyklonanlage
16 Schwertrübesortierer
17 Frischwasser- oder Zentratwasserzufuhr

18 Schwingentwässerer
19 Sandlager
20 Leitung
21 Leitung (mineralische Trübe)
22 Leitung (organische Trübe)
23 Vorlagebecken
24 Homogenisierer
25 Förderpumpe
26 Zentrifuge
27 Leitung
28 Fällungsstation
29 Neutralisationsstation
30 Transportband
31 Lastkraftwagen
32 pneumatische Flotationszelle
33 Begasungsreaktor
34 Trenngefäß
35 Oberlauf
36 Container
37 Leitung
38 Zugabestation
39 Füllstandregler
40 Filter
41 Vorflutergraben
42 Ölsperre

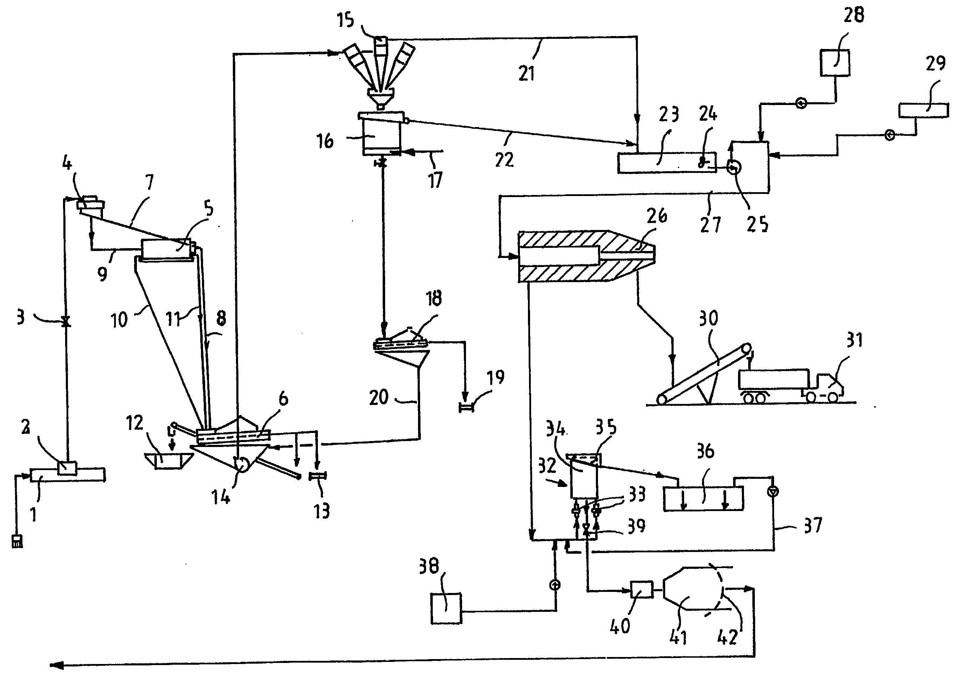

**Patentansprüche**

1. Verfahren zum Entschlammen von Gewässern, bei dem die im Schlamm enthaltenen anorganischen (Steine, Kies, Sand etc.) und organischen (Holz, Wurzeln etc.) Bestandteile voneinander separiert werden, **dadurch gekennzeichnet,** daß zunächst in einer ersten Stufe aus dem Schlamm die Bestandteile oberhalb einer bestimmten Größe getrennt nach anorganischen und organischen Bestandteilen ausgesondert, gereinigt und der Weiterverwertung zugeführt werden, daß anschließend in einer zweiten Stufe aus den verbliebenen Bestandteilen oberhalb einer Mindestgröße die anorganischen Bestandteile ausgesondert, gereinigt und ebenfalls der Weiterverwertung zugeführt werden und daß schließlich in einer dritten Stufe die anorganische und organische Trübe der dann übrig gebliebenen Bestandteile entwässert und dabei der gewonnene Dickschlamm und das Ablaufwasser weiterverarbeitet bzw. abgeführt werden.

2. Verfahren nach Anspruch 1, dadurch gekennzeichnet, daß in einer Vorstufe zur ersten Stufe zunächst das Wasser zusammen mit den Bestandteilen unterhalb der bestimmten Größe insbesondere durch einen Siebvorgang abgeschieden und dann der ersten Stufe zugeführt wird und die vorentwässerten Bestand teile oberhalb der bestimmten Größe nach anorganischen und organischen Bestandteilen getrennt und in dieser getrennten Form der ersten Stufe aufgegeben werden.

3. Verfahren nach Anspruch 1 oder 2, dadurch gekennzeichnet, daß das abgeschiedene Wasser beim Aussondern der anorganischen Bestandteile in der zweiten Stufe der ersten Stufe rückgeführt wird.

4. Verfahren nach einem der Ansprüche 1 bis 3, dadurch gekennzeichnet, daß zwischen der zweiten und der dritten Stufe die im Wasser gelösten Phosphate insbesondere durch Fe(III)Chloridsulfat oder Fe(II)Sulfat ausgefällt und in der dritten Stufe mit dem Dickschlamm ausgesondert werden.

5. Verfahren nach einem der Ansprüche 1 bis 4, dadurch gekennzeichnet, daß zwischen der zweiten und der dritten Stufe das Wasser insbesondere durch Zugabe von Kalkmilch neutralisiert wird.

6. Verfahren nach einem der Ansprüche 1 bis 5, dadurch gekennzeichnet, daß nach der dritten Stufe mögliches Öl aus dem Ablaufwasser absepariert und weiterverwendet und das verbliebene Ablaufwasser in das Gewässer oder in die vorliegenden Stufen rückgeführt wird.

7. Verfahren nach Anspruch 6, dadurch gekennzeichnet, daß zum Abseparieren des Öls aus dem Ablaufwasser dieses mit Luft oder Sauerstoff versetzt wird, wobei sich Luft- oder Sauerstoffteilchen an den Öltröpfchen anlagern, so daß die so gebildeten Öl/Luft-Teilchen durch den Auftrieb aufschwimmen und abgeführt werden können.

8. Verfahren nach Anspruch 6 oder 7, dadurch gekennzeichnet, daß zuvor das Ablaufwasser mit ölemulsionsbrechenden Chemikalien zur Erstellung eines Ölschlammes versetzt wird.

9. Verfahren nach einem der Ansprüche 1 bis 8, dadurch gekennzeichnet, daß aus dem Ablaufwasser die Schwebe- und Schwimmpartikel beseitigt, insbesondere ausgefiltert werden.

10. Anlage zur Durchführung des Verfahrens nach einem der Ansprüche 1 bis 9 mit einer Entnahmevorrichtung (1) für den Schlamm sowie mit Abscheidevorrichtungen für die anorganischen und organischen Bestandteile, **gekennzeichnet durch** einen Klassierer (6) zum Aussondern der Bestandteile oberhalb einer bestimmten Größe und Trennen nach anorganischen und organischen Bestandteilen, eine dem Klassierer (6) nachgeordnete Zyklonanlage (15) zum Aussondern der anorganischen Bestandteile oberhalb einer Mindestgröße aus den verbliebenen Bestandteilen, sowie eine der Zyklonanlage (15) nachgeordnete Zentrifuge (26) zum Entwässern der anorganischen und organischen Trübe der übrig gebliebenen Bestandteile und Überführen in Dickschlamm.

11. Anlage nach Anspruch 10, dadurch gekennzeichnet, daß der Klassierer ein Schwingklassierer (6) mit mehreren Bahnen ist, daß dem Schwingklassierer (6) ein Siebzyklon (4) mit einer nachgeordneten Waschtrommel (5) vorgeschaltet ist, daß der Siebzyklon (4) einen Oberlauf (7) und einen Unterlauf (9) besitzt, wobei der Oberlauf (7) direkt zu einer Bahn des Schwingklassierers (6) führt und auf diese in dem Siebzyklon (4) vorabgeschiedenes Wasser mit Bestandteilen unterhalb einer bestimmten Größe aufgibt und wobei der Unterlauf (9) zu der Waschtrommel (5) führt und die vorentwässerten Bestandteile oberhalb der bestimmten Größe dieser aufgibt, und daß in der Waschtrommel (5) die anorganischen und organischen Bestandteile voneinander getrennt und jeweils verschiedenen Bahnen des Schwingklassierers (6) zugeführt werden.

12. Anlage nach Anspruch 10 oder 11, dadurch gekennzeichnet, daß zwischen der Zyklonanlage (15) und der Zentrifuge (26) eine Fällungsstation (28) zum Ausfällen der im Wasser gelösten Phosphate insbesondere durch Fe(III)Chloridsulfat und Fe(II)Sulfat geschaltet ist.

13. Anlage nach einem der Ansprüche 10 bis 12, dadurch gekennzeichnet, daß zwischen der Zyklonanlage (15) und der Zentrifuge (26) eine Neutralisationsstation (29) zum Neutralisieren des Wassers insbesondere mit Kalkmilch geschaltet ist.

14. Anlage nach einem der Ansprüche 10 bis 13, dadurch gekennzeichnet, daß nach der Zentrifuge (26) eine pneumatische Flotationszelle (32) mit Begasungsreaktor (33) und Trenngefäß (34) mit Überlauf (35) zum Abscheiden von Öl aus dem Ablaufwasser angeordnet ist.

15. Anlage nach einem der Ansprüche 10 bis 14, dadurch gekennzeichnet, daß nach der Zentrifuge (26) ein Filter (40), insbesondere Sandfilter oder Festkörperfilter, angeordnet ist, der aus dem Ablaufwasser die Schwebe- und Schwimmpartikel beseitigt.

## Claims

1. A method of removing sludge from water, in which the inorganic constituents (stones, gravel, sand etc) and the organic constituents (wood, roots, etc) in the sludge are separated from one another, characterised in that firstly in a first step the constituents of the sludge above a given size are separated into inorganic and organic constituents and removed, cleaned and sent for further processing, next in a second step the inorganic constituents above a minimum size are removed from the remaining constituents, purified and likewise sent for further processing, and finally in a third step the inorganic and organic sludge consisting of the remaining constituents is dewatered and the resulting thick sludge and the outflowing water are additionally processed or discharged.

2. A method according to claim 1, characterised in that in a preliminary step before the first step the water together with the constituents below the given size is first separated, more particularly by a screening process, and then supplied to the first step and the pre-dewatered constituents above the given size are separated into inorganic and organic constituents and delivered in separated form to the first step.

3. A method according to claim 1 or 2, characterised in that when the inorganic constituents are removed in the second step, the separated water is returned to the first step.

4. A method according to any of claims 1 to 3, characterised in that between the second and the third step the phosphates dissolved in the water are precipitated, more particularly by Fe(II) chloride sulphate or Fe(II) sulphate and are removed with the thick sludge in the third step.

5. A method according to any of claims 1 to 4, characterised in that between the second and the third step the water is neutralized, more particularly by adding milk of lime.

6. A method according to any of claims 1 to 5, characterised in that any oil remaining after the third step is separated from the outflowing water and further used and the remaining outflowing water is returned to the water or to the preceding steps.

7. A method according to claim 6, characterised in that in order to separate the oil from the outflowing water, air or oxygen is added, whereupon air or oxygen particles accumulate on the oil droplets and the resulting oil/air particles float through buoyancy and can be removed.

8. A method according to claim 6 or 7, characterised in that chemicals for breaking an oil emulsion are first added to the outflowing water to form an oil sludge.

9. A method according to any of claims 1 to 8, characterised in that the suspended and floating particles are removed from the outflowing water, more particularly by filtering.

10. A plant for working the method according to any of claims 1 to 9, comprising a sludge-removing device (1) and devices for separating inorganic from organic constituents, characterised by a classifier (6) for removing constituents above a given size and separating them into inorganic and organic constituents, a cyclone plant (15) downstream of the classifier (6) for removing the organic constituents above a minimum size from the remaining constituents, and downstream of the cyclone plant (15), a centrifuge (26) for dewatering the inorganic and organic sludge comprising the remaining constituents and converting it into thick sludge.

11. A plant according to claim 10, characterised in that the classifier is a vibrating classifier (6) with a number of tracks, the vibrating classifier (6) is disposed downstream of a screen cyclone (4) followed by a washing drum (5), the screen cyclone (4) has an upper flow (7) and a lower flow (9), the upper flow (7) leading directly to a track of the vibrating classifier (6) and supplying it with water previously separated in the screen cyclone (4) and containing constituents below a given size, and the lower flow (9) leading to the washing drum (5) and supplying it with the predewatered constituents above the given size, and the inorganic and organic constituents are separated in the washing drum (5) and supplied to different respective tracks of the vibrating classifier (6).

12. A plant according to claim 10 or 11, characterised in that a precipitating station (28) for precipitating phosphates dissolved in the water, more particularly by using Fe (III) chloride sulphate and Fe(II) sulphate, is disposed between the cyclone plant (15) and the centrifuge (26).

13. A plant according to any of claims 10 to 12, characterised in that a neutralization station (29) for neutralizing the water, more particularly with milk of lime, is disposed between the cyclone plant (15) and the centrifuge (26).

14. A plant according to any of claims 10 to 13, characterised in that the centrifuge (26) is followed by a pneumatic flotation cell (32) with a gasifying reactor (33) and separating vessel (34) with an overflow (35) for separating oil from the outflowing water.

15. A plant according to any of claims 10 to 14, characterised in that the centrifuge (269 is followed by a filter (40), more particularly a sand filter or solids filter, which removes suspended and floating particles from the outflowing water.

## Revendications

1. Procédé pour retirer les boues d'eaux brutes, dans lequel on sépare entre eux les composants non organiques (pierres, gravier, sable etc.) et les composants organiques (bois, racines etc.) contenus dans les boues, caractérisé en ce qu'on sépare d'abord les boues, au cours d'une première étape, les composants dépassant une taille déterminée en les triant en composants non organiques et composants organiques, on les nettoie et on les envoie à une utilisation ultérieure, qu'ensuite, au cours d'une deuxième étape, on sépare des composants restants les composant non organiques dépassant une taille minimale, on les nettoie et on les envoie également à une utilisation ultérieure et qu'enfin, au cours d'une troisième étape, on déshydrate le liquide trouble non organique et organique des composants restants et on traite ensuite ou on évacue les boues épaisses ainsi obtenues.

2. Procédé selon la revendication 1, caractérisé en ce qu'au cours d'une étape préalable précédant la première étape, on sépare d'abord, notamment par une opération de tamisage, l'eau avec les composants inférieurs à la taille déterminée et on l'envoie ensuite à la première étape et on sépare les composants dépassant la taille déterminée et prédéshydratés en composants non organiques et composants organiques puis on les envoie à la première étape sous cette forme séparée.

3. Procédé selon la revendication 1 ou 3, caractérisé en ce qu'on renvoie à la première étape l'eau séparée lors du triage des composants non organiques au cours de la deuxième étape.

4. Procédé selon l'une des revendications 1 à 3, caractérisé en ce qu'entre la deuxième étape et la troisième étape, les phosphates dissous dans l'eau sont précipités, notamment par du chlorosulfate ferrique ou du sulfate ferreux, et ces phosphates sont séparés au cours de la troisième étape avec les boues épaisses.

5. Procédé selon l'une des revendications 1 à 4, caractérisé en ce qu'entre la deuxième étape et la troisième étape, on neutralise l'eau, notamment par addition de lait de chaux.

6. Procédé selon l'une des revendications 1 à 5, caractérisé en ce qu'après la troisième étape, l'huile éventuellement présente est séparée de l'eau d'écoulement et réutilisée, l'eau d'écoulement restante étant renvoyée dans l'eau brute ou dans les étapes précédentes.

7. Procédé selon la revendication 6, caractérisé en ce que pour séparer l'huile de l'eau d'écoulement, on mélange celle-ci à de l'air ou de l'oxygène, des particules d'air ou d'oxygène se fixant alors sur les gouttelettes d'huile, de sorte que les particules huile/air ainsi formées sont mises en flottaison par poussée ascensionnelle et peuvent être évacuées.

8. Procédé selon la revendication 6 ou 7, caractérisé en ce qu'on mélange d'abord l'eau d'écoulement avec des produits chimiques désémulsifiant les émulsions d'huile pour obtenir une boue d'huile.

9. Procédé selon l'une des revendications 1 à 8, caractérisé en ce qu'on élimine de l'eau d'écoulement les particules en suspension ou flottantes, notamment en les filtrant.

10. Installation pour la mise en pratique du procédé selon l'une des revendications 1 à 9, comportant un dispositif d'extraction des boues (1) ainsi que des appareils séparateurs des composants non organiques et organiques, caractérisé par un trieur (6) pour trier les constituants dépassant une taille déterminée et les séparer en composants non organiques et composants organiques, un séparateur à cyclone (15) disposé après le trieur (6) pour séparer des composant restant les composants non organiques dépassant une taille minimale, ainsi que par une centrifugeuse (26) disposée après le séparateur à cyclone (15) pour déshydrater le liquide trouble non organique et organique des composants restants et le transformer en boues épaisses.

11. Installation selon la revendication 10, caractérisée en ce que le trieur est un trieur oscillant (6) à plusieurs pistes, en ce qu'un tamis à cyclone (4) avec un tambour de lavage (5) disposé à la suite est monté devant le trieur oscillant (6), en ce que le tamis à cyclone (4) comporte un déversoir (7) et un écoulement inférieur (9), le déversoir (7) allant directement à une piste du trieur oscillant (6) et fournissant à celle-ci l'eau séparée au préalable dans le tamis à cyclone (4) avec les composants inférieurs à une taille déterminée, l'écoulement inférieur (9) allant au tambour de lavage (5) et fournissant à celui-ci les composants prédéshydratés dépassant la taille déterminée, en ce que dans le tambour de lavage (5) on sépare entre eux les composants non organiques et les composants organiques et on les envoie respectivement à des pistes différentes du trieur oscillant (6).

12. Installation selon la revendication 10 ou 11, caractérisé en ce qu'un poste de précipitation (28) est disposé entre le séparateur à cyclone (15) et la centrifugeuse (26) pour précipiter les phosphates dissous dans l'eau, notamment par du chlorosulfate ferrique et du sulfate ferreux.

13. Installation selon l'une des revendications 10 à 12, caractérisée en ce qu'un poste de neutralisation (29) est disposé entre le séparateur à cyclone (15) et la centrifugeuse (26) pour neutraliser l'eau, notamment par du lait de chaux.

14. Installation selon l'une des revendications 10 à 13, caractérisé en qu'après la centrifugeuse (26) est disposée une cellule de flottaison pneumatique (26) avec réacteur à gaz (33) et cuve de séparation (34) à déversoir (35) pour séparer l'huile de l'eau d'écoulement.

15. Installation selon l'une des revendications 10 à 14, caractérisé en ce qu'après la centrifugeuse (26) est disposé un filtre (40), notamment un filtre à sable ou un filtre à corps solides, ce filtre éliminant les particules en suspension et les particules flottantes de l'eau d'écoulement.